# EUROPEAN PATENT APPLICATION

(11) **EP 1 967 918 A1**
(43) Date of publication of application: **10.09.2008**
(21) Application number: 08152218.7
(22) Date of filing: 03.03.2008
(51) Int. Cl.: G03G 15/20

(54) **Image forming apparatus and fixing unit thereof**

(30) Priority: 06.03.2007 KR 20070021997
(71) Applicant: Samsung Electronics Co., Ltd., Suwon-si, Gyeonggi-do 442-742 (KR)
(72) Inventor: Lee, Jae Hoon, Seocho-gu Seoul (KR); KIM, Hak Jyum, Seoul (KR); Lyu, Se Hyun, Seoul (KR)
(74) Representative: Waddington, Richard

(57) **Abstract**

An image forming apparatus and a fixing unit (30) thereof are disclosed. The fixing unit (30) includes a heating roller (31), a press roller (33) mounted in close contact with the heating roller (31) to apply heat and pressure to the printable medium with the heating roller (31), a press lever (35) to press the press roller (33) toward the heating roller (31), a press spring (39) connected to the press lever (35), a release device (40) to operate the press lever (35) to release pressing force exerted on the press roller (33), and a power conversion device (60) to transmit driving power generated from a main driving source to drive the heating roller (31) to the release device (40). Accordingly, since the press lever (35) pressing the press roller (33) to closely contact the heating roller (31) can be operated by the driving power of the main driving source, the jammed printable medium can be easily removed.

## Description

### BACKGROUND OF THE INVENTION

### 1. Field of the Invention

Aspects of the present invention relate to an image forming apparatus, and more particularly to an electrophotographic image forming apparatus and a fixing unit thereof.

### 2. Related Art

An image forming apparatus is an apparatus that prints a black and white image or a color image on a printable medium, e.g., paper, according to an image signal. Examples of an image forming apparatus include a laser printer, an ink-jet printer, a copying machine, a multi-function printer, and a fax machine. Image forming apparatuses may be classified as an electrophotographic type in which a light beam is scanned to a photosensitive body to form an electrostatic latent image and a developer is adhered to the electrostatic latent image to transfer the developer onto a printable medium, or an ink-jet type in which a liquid type ink is ejected onto a surface of a printable medium according to an image signal.

The electrophotographic image forming apparatus is configured such that a surface of a photosensitive body is charged with a predetermined electric potential and a light beam is scanned to the photosensitive body to form an electrostatic latent image due to generation of electric potential difference. A developer, i.e., a toner, adheres to the electrostatic latent image to form a visible image. The visible image formed on the photosensitive body is transferred onto the printable medium, and is fixed to the surface of the printable medium. In order to fix the visible image formed by the developer powders to the surface of the printable medium, the electrophotographic image forming apparatus has a fixing unit that applies heat and pressure to the printable medium onto which the visible image has been transferred.

The fixing unit generally includes a heating roller that generates heat of high temperature and a press roller that is mounted so as to closely contact the heating roller. The heating roller includes a heat source, such as a lamp, a heating element, or the like; an aluminum pipe provided around the heat source; and a release layer provided on the surface of the aluminum pipe. The press roller has an elastic layer on an outer surface. During the printing operation, the visible image-transferred printable medium receives heat and pressure while passing between the heating roller and the press roller. The visible image is fixed to the surface of the printable medium. When the printable medium passes through the fixing unit, the visible image-transferred surface of the printable medium comes into contact with the heating roller.

Because the printable medium can easily adhere to the heating roller when the visible image is fixed to the printable medium, jams occur in the fixing unit more frequently than in other components. When the printable medium is caught between the heating roller and the press roller, separating the press roller from the heating roller is an effective way to remove the printable medium, because it is not easy to pull out the printable medium from between the heating roller and the press roller by force.

For this purpose, the press roller is mounted slightly movably in front and rear directions of the heating roller, and is pressed to the heating roller by a press spring. The press spring is configured such that the pressing force of the press spring is released by a release device. In a normal operating state, the press roller is pressed to the heating roller by the press spring. When a jam occurs, the pressing force of the press spring is released by the release device, and thus the printable medium caught between the heating roller and the press roller can be removed easily.

The conventional release device has been configured as a manual lever, which is manually manipulated by a user, or an electrically-driven mechanism, which operates by an additional driving source provided separately from a main driving source. However, the manual lever gives a user inconvenience in removing the jammed printable medium because the user must directly manipulate the manual lever by hand. The electrically-driven mechanism also increases manufacturing costs due to the installation of the additional driving source.

### SUMMARY OF THE INVENTION

Aspects of the invention provide an image forming apparatus and a fixing unit thereof that is capable of automatically releasing pressing force of a press roller closely contacting a heating roller by using a main driving source.

Additional aspects and/or advantages of the invention will be set forth in part in the description which follows and, in part, will be obvious from the description, or may be learned by practice of the invention.

According to the present invention there is provided an apparatus and method as set forth in the appended claims. Other features of the invention will be apparent from the dependent claims, and the description which follows.

According to an aspect of the invention, an image forming apparatus is provided. The image forming apparatus comprises a photosensitive body on which an electrostatic latent image is formed; a developer supply device to supply a developer to the photosensitive body so as to form a visible image; a transfer device to transfer the visible image formed on the photosensitive body onto a printable medium; and a fixing unit to fix the visible image onto the printable medium and including a heating roller, a press roller mounted in close contact with the heating roller to apply heat and pressure to the printable medium with the heating roller, a press lever to press the press roller toward the heating roller, a press spring connected to the press lever, a release device to operate the press lever so as to release a pressing force exerted on the press roller, and a power conversion device to transmit a driving power generated from a main driving source to drive the heating roller and the release device.

Preferably, the press lever is mounted rotatably by a hinge shaft, and the release device includes a lever operating cam to rotate the press lever so as to move the press roller away from the heating roller.

Preferably, the heating roller receives the driving power through a main driving gear connected to the main driving source, and the power conversion device is able to transmit the driving power of the main driving gear to the release device.

Preferably, the image forming apparatus further comprises a heating roller gear provided at the heating roller to drive the heating roller, a roller driving gear mounted between the main driving gear and the heating roller gear to transmit the driving power to the heating roller gear, and a cam gear connected to the lever operating cam to transmit the driving power to the lever operating cam. The power conversion device may include a moving gear mounted movably on the main driving gear to be selectively connected to the roller driving gear or the cam gear.

Preferably, the power conversion device further includes a moving shaft coupled to the moving gear, a shaft-moving spring to push the moving shaft in one direction, and a shaft-moving cam to press the moving shaft in a direction opposite to the pushing direction of the shaft-moving spring.

Preferably, the image forming apparatus further comprises a clutch device mounted between the main driving source and the shaft-moving cam to intermittently transmit the driving power of the main driving source to the shaft-moving cam so as to operate the shaft-moving cam.

Preferably, the moving shaft and the roller driving gear are separately mounted, a power connecting shaft is provided at one of the moving shaft and the roller driving gear, a coupling recess is provided at the other one of the moving shaft and the roller driving gear, into which the power connecting shaft is inserted, to couple the moving shaft and the roller driving gear, and the shaft-moving spring is arranged between the moving shaft and the roller driving gear.

According to another aspect of the invention, a fixing unit of an image forming apparatus is provided. The fixing unit comprises a heating roller to apply heat to a printable medium onto which a visible image is transferred; a press roller mounted in close contact with the heating roller; a press lever to press the press roller toward the heating roller; a press spring connected to the press lever to cause the press lever press the press roller; a release device to operate the press lever so as to release a pressing force exerted on the press roller; and a power conversion device to transmit a driving power generated from a main driving source so as to drive the heating roller to the release device.

In addition to the example embodiments and aspects as described above, further aspects and embodiments will be apparent by reference to the drawings and by study of the following descriptions.

### BRIEF DESCRIPTION OF THE DRAWINGS

A better understanding of the present invention will become apparent from the following detailed description of example embodiments and the claims when read in connection with the accompanying drawings, all forming a part of the disclosure of this invention. While the following written and illustrated disclosure focuses on disclosing example embodiments of the invention, it should be clearly understood that the same is by way of illustration and example only and that the invention is not limited thereto. The spirit and scope of the present invention are limited only by the terms of the appended claims. The following represents brief descriptions of the drawings, wherein:
FIG. 1 is a side-sectional view schematically illustrating an image forming apparatus according to an example embodiment of the present invention;
FIG. 2 is a perspective view schematically illustrating a fixing unit of the image forming apparatus according to an example embodiment of the present invention;
FIG. 3 is a plan view schematically illustrating the fixing unit of the image forming apparatus according to an example embodiment of the present invention;
FIG. 4 is a perspective view illustrating a jam removing operation of the fixing unit of the image forming apparatus according to an example embodiment of the present invention; and
FIG. 5 is a plan view illustrating the jam removing operation of the fixing unit of the image forming apparatus according to an example embodiment of the present invention.

### DETAILED DESCRIPTION OF THE EMBODIMENTS

Reference will now be made in detail to present embodiments of the present invention, examples of which are illustrated in the accompanying drawings, wherein like reference numerals refer to like elements throughout. The embodiments are described below in order to explain the present invention by referring to the figures.

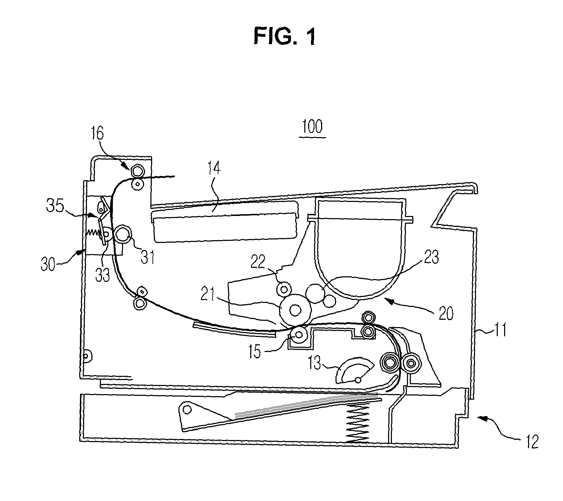

As shown in FIG. 1, an image forming apparatus 100 according to an example embodiment of the present invention includes a main body 11, a pickup device 13, a development unit 20, a light scanning device 14, a transfer device 15, a fixing unit 30, and a printable medium discharge device 16. According to other aspects of the present invention, the image forming apparatus 100 may include additional and/or different units. Similarly, the functionality of two or more of the above units may be combined into a single component.

The main body 11 forms an external appearance of the image forming apparatus 100. The printable medium loading device 12 loads a printable medium. The pickup device 13 picks up the printable medium loaded on the printable medium loading device 12. The development unit 20 forms a visible image using a developer. The light scanning device 14 generates a beam according to an image signal. The transfer device 15 transfers the visible image formed on the development unit 20 onto the printable medium using the beam generated by the light scanning device 14. The fixing unit 30 fixes the visible image onto the printable medium, and the printable medium discharge device 16 discharges the printable medium which has been printed to the outside.

The development unit 20 includes a photosensitive body 21 on which light scanned from the light scanning device 14 is incident and an electrostatic latent image is formed, a charge device 22, and a developer supply device 23. The charge device 22 charges the surface of the photosensitive body 21 with a constant electric potential, and the developer supply device 23 adheres the developer to the photosensitive body 21.

When the printing operation of the image forming apparatus 100 is initiated, the pickup device 13 picks up the printable medium loaded on the printable medium loading device 12, and feeds the printable medium to the development unit 20. The beam generated from the light scanning device 14 is incident on the surface of the photosensitive body 21, which is charged with the constant electric potential by the charge device 22 according to an image signal, and an electrostatic latent image is formed on the photosensitive body 21. The developer is adhered to the electrostatic latent image region by the developer supply device 23, and a visible image is formed by developer powders. The visible image is transferred onto the surface of the printable medium by the transfer device 15, and fixed to the surface of the printable medium when the printable medium passes through the fixing unit 30. The printable medium on which the image has been printed is discharged to the outside of the main body 11 by the printable medium discharge device 16.

The above printing operation describes the operation of a typical electrophotographic image forming apparatus, and all the components except for the fixing unit 30 are the same as the components of a typical image forming apparatus. Therefore, a detailed explanation of the constitutional components except for the fixing unit 30 in the image forming apparatus 100 will be omitted.

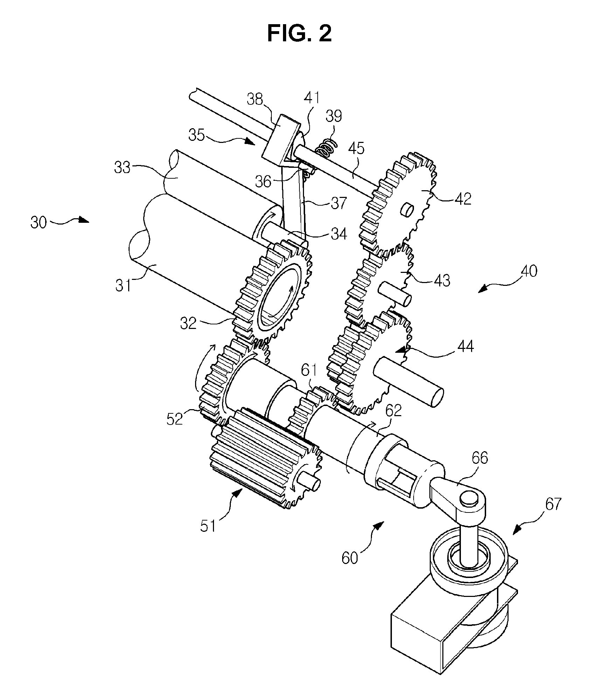

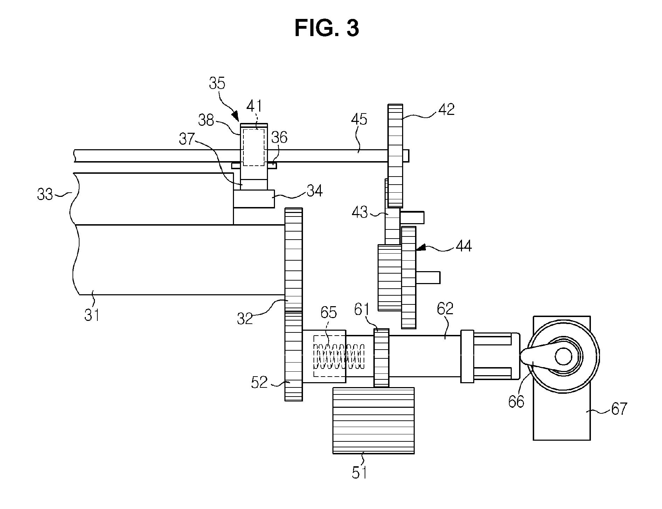

As shown in FIGs. 2 and 3, the fixing unit 30 according to an example embodiment of the present invention includes a heating roller 31, a press roller 33, a press lever 35, a release device 40, and a power conversion device 60. The heating roller 31 generates heat of high temperature. The press roller 33 is mounted in close contact with the heating roller 31. The press lever 35 presses the press roller 33 toward the heating roller 31. The release device 40 releases a pressing force of the press lever 35. The power conversion device 60 transmits a driving power of a main driving source (not shown) to the heating roller 31 or to the release device 40.

The heating roller 31 includes a heat source (not shown), such as a lamp, a heating element, or the like. The press roller 33 includes an elastic layer (not shown) that closely contacts the heating roller 31. The heating roller 31 is provided with a heating roller gear 32. The heating roller gear 32 engages a roller driving gear 52, which receives the driving power of the main driving source through a main driving gear 51 that drives the various components of the image forming apparatus.

The press roller 33 is mounted in front and rear directions of the heating roller 31 so as to enable the press roller to separate from the heating roller 31. When the press roller 33 is in contact with the heating roller 31, the press roller 33 rotates together with the heating roller 31. The press roller 33 is provided with a roller shaft 34 that protrudes outward from an end of the press roller 33. The roller shaft 34 is pressed toward the heating roller 31 by the press lever 35, so that the press roller 33 comes into close contact with the heating roller 31.

The press lever 35 includes a pressing unit 37 and an operating unit 38. The pressing unit 37 is supported by a hinge shaft 36 to rotate at a predetermined angle and is provided at a portion of the hinge shaft 36 to press the roller shaft 34. The operating unit 38 is provided at another portion of the hinge shaft 36 to rotate the pressing unit 37. The pressing unit 37 is pressed toward the press roller 33 by a press spring 39. If an external force is applied to the operating unit 38, the operating unit 38 rotates on the hinge shaft 36, so that the pressing unit 37 moves away from the roller shaft 34. As a result, the press roller 33 is separated from the heating roller 31.

According to other aspects of the invention, the position of the hinge shaft 36 of the press lever 35 can be variously changed, and the press spring 39 can be configured as an extension spring instead of a compression spring as shown in the drawings.

The release device 40 includes a lever operating cam 41, a cam gear 42, a connecting gear 43, and a cam driving gear 44. The lever operating cam 41 presses the operating unit 38 of the press lever 35. The cam gear 42 is connected to the lever operating cam 41. The connecting gear 43 is engaged with the cam gear 42 and the cam driving gear 43. The cam driving gear 44 engages with the connecting gear 43 and transmits a driving force to the lever operating cam 41 via the connecting gear 43 and the cam gear 42. The lever operating cam 41 is connected to the cam gear 42 by a cam shaft 45. When the cam gear 42 rotates, the lever operating cam 41 rotates together with the cam gear 42 to press the operating unit 38 of the press lever 35, so that the pressing unit 37 of the press lever 35 moves away from the press roller 33.

The power conversion device 60 selectively transmits the driving power of the main driving gear 51 to the roller driving gear 52, which drives the heating roller 31, or the cam driving gear 44, which operates the lever operating cam 41. The power conversion device 60 includes a moving gear 61, a moving shaft 62, a shaft-moving spring 65, and a shaft-moving cam 66. The moving gear 61 is arranged so as to move while being engaged with the main driving gear 51. The moving shaft 62 is formed integrally with the moving gear 61. The shaft-moving spring 65 pushes one end of the moving shaft 62 so as to separate the moving shaft 62 from the roller driving gear 52, and the shaft-moving cam 66 pushes the other end of the moving shaft 62 to couple the moving shaft 62 to the roller driving gear 52.

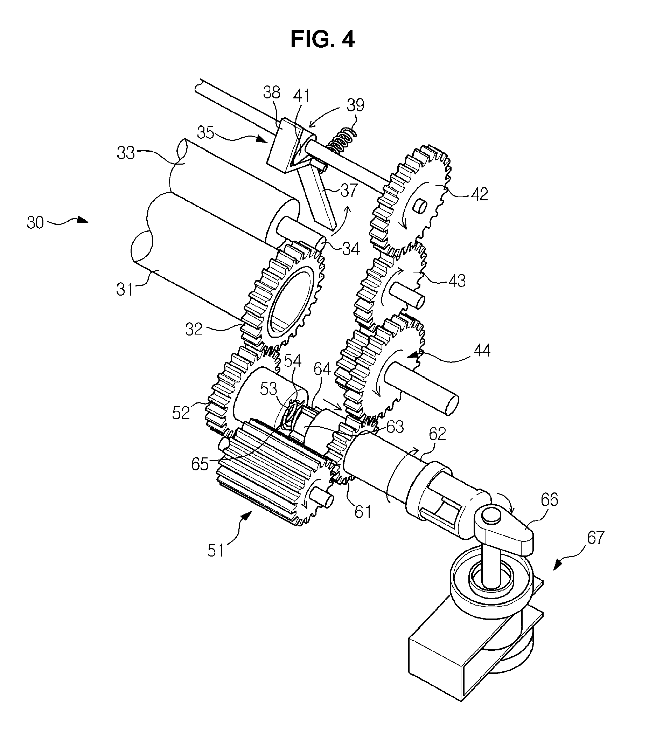

A power connecting shaft 63 is provided at one end of the moving shaft 62. As shown in FIG. 4, the power connecting shaft 63 is provided with plural key portions 64. The roller driving gear 52 is provided with plural key ways 54 into which the key portions 64 may be inserted and a coupling recess 53 into which the power connecting shaft 63 may be inserted. The shaft-moving spring 65 is mounted in the coupling recess 53 of the roller driving gear 52, and is exposed to the outside of the coupling recess 53 so as to push one end of the moving shaft 62 toward the shaft-moving cam 66. If the shaft-moving cam 66 does not push the other end of the moving shaft 62, the shaft-moving spring 65 pushes one end of the moving shaft 62 to separate the moving shaft 62 from the roller driving gear 52. When the moving shaft 62 is separated from the roller driving gear 52, the moving gear 61 integrally formed at the moving shaft 62 engages with the cam driving gear 44.

The shaft-moving cam 66 is coupled to a clutch device 67 connected to the main driving source (not shown). The clutch device 67 transmits the driving power of the main driving source to the shaft-moving cam 66 to rotate the shaft-moving cam 66. In the normal printing operation state, the shaft-moving cam 66 pushes the other end of the moving shaft 62 so that the power connecting shaft 63 and the key portions 64 of the moving shaft 62 are respectively inserted into the coupling recess 53 and the key ways 54 of the roller driving gear 52. When a jam occurs, the shaft-moving cam 66 rotates to release the pressing force exerted on the moving shaft 62. When the shaft-moving cam 66 presses the moving shaft 62, the moving shaft 62 is coupled to the roller driving gear 52, and the moving gear 61 integrally formed at the moving shaft 62 disengages from the cam driving gear 44.

The operation of the fixing unit 30 of the image forming apparatus according to an example embodiment of the present invention will now be described. As shown in FIGs. 2 and 3, in the normal printing operation state, the shaft-moving cam 66 pushes the other end of the moving shaft 62 to couple the moving shaft 62 to the roller driving gear 52. The moving gear 61, which is engaged with the main driving gear 51, disengages from the cam driving gear 44, and the press spring 39 pushes the pressing unit 37 of the press lever 35, so that the press roller 33 comes into close contact with the heating roller 31.

If the main driving gear 51 rotates, the moving shaft 62 integrally formed at the moving gear 61 rotates, and the roller driving gear 52 and the heating roller gear 32 also rotate. Accordingly, the heating roller 31 and the press roller 33 rotate together so as to apply heat and pressure to the printable medium onto which the visible image has been transferred.

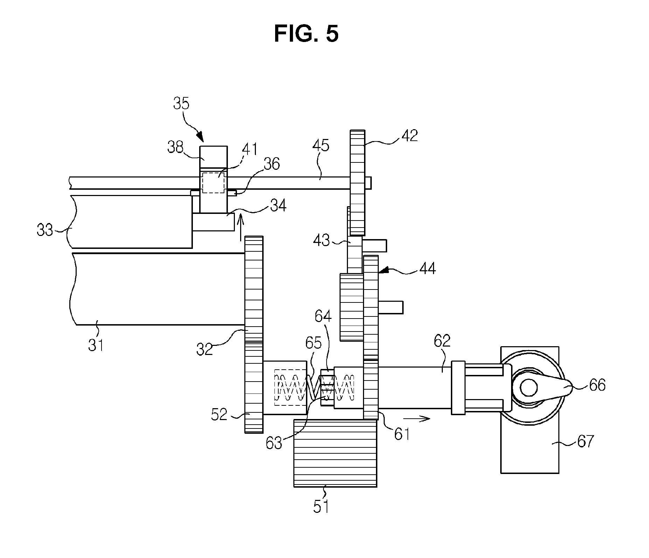

If a jam occurs due to the printable medium being caught between the heating roller 31 and the press roller 33, as shown in FIGs. 4 and 5, the clutch device 67 operates to rotate the shaft-moving cam 66 at a predetermined angle (e.g., 180 degrees). If the shaft-moving cam 66 rotates to release the pressing force exerted on the moving shaft 62, the shaft-moving spring 65 is elastically restored to push the moving shaft 62. The power connecting shaft 63 and the key portions 64 of the moving shaft 62 are respectively separated from the coupling recess 53 and the key ways 54 of the roller driving gear 52. The moving gear 61 is engaged with the cam driving gear 44 while being engaged with main driving gear 51.

When the moving gear 61 is engaged with the cam driving gear 44, the heating roller 31 and the press roller 33 stop rotating, and the cam driving gear 44, the connecting gear 43 and the cam gear 42 rotate at a predetermined angle (e.g., 90 degrees). When the cam gear 42 rotates, the lever operating cam 41 connected to the cam gear 42 also rotates at a predetermined angle (e.g., 90 degrees) to press the operating unit 38 of the press lever 35. The press lever 35 rotates on the hinge shaft 36, so that the pressing unit 37 moves away from the roller shaft 34 of the press roller 33. If the lever operating cam 41 rotates at a predetermined angle to release the pressing force of the press lever 35 exerted on the press roller 33, the main driving source stops operating, and the press roller 33 becomes capable of freely moving in the front and rear directions of the heating roller 31.

Accordingly, if a user draws out the printable medium caught between the heating roller 31 and the press roller 33, the press roller 33 is separated from the heating roller 31, and as a result the jammed printable medium can be easily removed. When the jammed printable medium is removed, the main driving source operates while the moving gear 61 is engaged with the cam driving gear 44, so that the lever operating cam 41 rotates to its original position. If the lever operating cam 41 rotates to release the pressing force of the lever operating cam 41 exerted on the press lever 35, the press spring 39 is elastically restored, and the press lever 35 presses the press roller 33 to closely contact the heating roller 31. The clutch device 67 temporarily operates to rotate the shaft-moving cam 66 at a predetermined angle. The rotation of the shaft-moving cam 66 is stopped so as to press the moving shaft 62. Accordingly, the moving shaft 62 is coupled again to the roller driving gear 52, and the moving gear 61 disengages from the cam driving gear 44.

According to other aspects of the present invention, the power conversion device 60 may have other various configurations. For example, the mounting positions of the shaft-moving cam 66 and the shaft-moving spring 65 can be changed into other positions. The shaft-moving cam 66 and the shaft-moving spring 65 can be substituted by other rectilinear moving devices, such as a linear gear, a ball screw, or the like, to move the moving shaft 62.

In the above description, a laser printer has been exemplified as the image forming apparatus according to the present invention. However, aspects of the present invention can also be applied to other electrophotographic image forming apparatuses, such as a copying machine, a multi-function printer, a fax machine, or the like.

As apparent from the above description, the image forming apparatus according to aspects of the present invention is constituted such that the press lever pressing the press roller to closely contact the heating roller can be operated by the driving power of the main driving source. Accordingly, it is convenient for a user to remove the jammed printable medium (when compared to a conventional manual lever), and manufacturing costs can be curtailed (when compared to a conventional constitution of installing an additional driving source to release pressing force of a press roller).

While there have been illustrated and described what are considered to be example embodiments of the present invention, it will be understood by those skilled in the art and as technology develops that various changes and modifications, may be made, and equivalents may be substituted for elements thereof without departing from the true scope of the present invention. Many modifications, permutations, additions and sub-combinations may be made to adapt the teachings of the present invention to a particular situation without departing from the scope thereof. For example, the various components arranged between the press roller and the power conversion device, such as the press lever and the cam gear, are an example of a releasing unit that operates to selectively move the press roller toward and away from the heating roller. Accordingly, it is intended, therefore, that the present invention not be limited to the various example embodiments disclosed, but that the present invention includes all embodiments falling within the scope of the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An image forming apparatus comprising:
a photosensitive body (21) on which an electrostatic latent image is formed;
a developer supply device (23) to supply a developer to the photosensitive body (21) so as to form a visible image;
a transfer device (15) to transfer the visible image formed on the photosensitive body (21) onto a printable medium; and
a fixing unit (30) to fix the visible image onto the printable medium and including a heating roller (31), a press roller (33) mounted in close contact with the heating roller (31) to apply heat and pressure to the printable medium with the heating roller (31), a press lever (35) to press the press roller (33) toward the heating roller (31), a press spring (39) connected to the press lever (35), a release device (40) to operate the press lever (35) so as to release a pressing force exerted on the press roller (33), and a power conversion device (60) to transmit a driving power generated from a main driving source to drive the heating roller (31) and the release device (40).

2. The image forming apparatus according to claim 1, wherein:
the press lever (35) is mounted rotatably by a hinge shaft (36); and
the release device (40) includes a lever operating cam (41) to rotate the press lever (35) so as to move the press roller (33) away from the heating roller (31).

3. The image forming apparatus according to claim 2, wherein:
the heating roller (31) receives the driving power through a main driving gear (51) connected to the main driving source; and
the power conversion device (60) is able to transmit the driving power of the main driving gear (51) to the release device (40).

4. The image forming apparatus according to claim 3, further comprising:
a heating roller gear (32) provided at the heating roller (31) to drive the heating roller (31);
a roller driving gear (52) mounted between the main driving gear (51) and the heating roller gear (32) to transmit the driving power to the heating roller gear (32); and
a cam gear (42) connected to the lever operating cam (41) to transmit the driving power to the lever operating cam (41);
wherein the power conversion device (60) includes a moving gear (61) mounted movably on the main driving gear (51) to be selectively connected to the roller driving gear (52) or the cam gear (42).

5. The image forming apparatus according to claim 4, wherein the power conversion device (60) further includes:
a moving shaft (62) coupled to the moving gear (61);
a shaft-moving spring (65) to push the moving shaft (62) in one direction; and
a shaft-moving cam (66) to press the moving shaft (62) in a direction opposite to the pushing direction of the shaft-moving spring (65).

6. The image forming apparatus according to claim 5, further comprising:
a clutch device (67) mounted between the main driving source and the shaft-moving cam (66) to intermittently transmit the driving power of the main driving source to the shaft-moving cam (66) so as to operate the shaft-moving cam (66).

7. The image forming apparatus according to claim 5 or claim 6, wherein:
the moving shaft (62) and the roller driving gear (52) are separately mounted;
a power connecting shaft (63) is provided at one of the moving shaft (62) and the roller driving gear (52);
a coupling recess (53) is provided at the other of the moving shaft (62) and the roller driving gear (52), into which the power connecting shaft (63) is inserted, to couple the moving shaft (62) and the roller driving gear (52); and
the shaft-moving spring (65) is arranged between the moving shaft (62) and the roller driving gear (52).

8. A fixing unit of an image forming apparatus, comprising:
a heating roller (31) to apply heat to a printable medium onto which a visible image is transferred;
a press roller (33) mounted in close contact with the heating roller (31);
a press lever (35) to press the press roller (33) toward the heating roller (31);
a press spring (39) connected to the press lever (35) to cause the press lever (35) to press the press roller (33);
a release device (40) to operate the press lever (35) so as to release a pressing force exerted on the press roller (33); and
a power conversion device (60) to transmit a driving power generated from a main driving source so as to drive the heating roller (31) to the release device (40).

9. The fixing unit according to claim 8, wherein:
the press lever (35) is rotatably mounted by a hinge shaft (36); and
the release device (40) includes a lever operating cam (41) to rotate the press lever (35) so as to move the press roller (33) away from the heating roller (31).

10. The fixing unit according to claim 9, wherein:
the heating roller (31) receives the driving power through a main driving gear (51) connected to the main driving source; and
the power conversion device (60) is able to transmit the driving power of the main driving gear (51) to the release device (40).

11. The fixing unit according to claim 10, further comprising:
a heating roller gear (32) provided at the heating roller (31) to transmit the driving power to the heating roller (31);
a roller driving gear (52) mounted between the main driving gear (51) and the heating roller gear (32) to transmit the driving power from the main driving gear (51) to the heating roller gear (32); and
a cam gear (42) connected to the lever operating cam (41) to transmit the driving power to the lever operating cam (41);
wherein the power conversion device (60) includes a moving gear (61) mounted movably on the main driving gear (51) to be connected to the roller driving gear (52) or the cam gear (42).

12. The fixing unit according to claim 11, wherein the power conversion device (60) further includes:
a moving shaft (62) coupled to the moving gear (61);
a shaft-moving spring (65) to push the moving shaft (62) in one direction; and
a shaft-moving cam (66) to press the moving shaft (62) in a direction opposite to the pushing direction of the shaft-moving spring (65).

13. The fixing unit according to claim 12, further comprising:
a clutch device (67) mounted between the main driving source and the shaft-moving cam (66) to intermittently transmit the driving power of the main driving source to the shaft-moving cam (66) so as to operate the shaft-moving cam (66).

14. The fixing unit according to claim 12 or claim 13, wherein:
the moving shaft (62) and the roller driving gear (52) are separately mounted;
a power connecting shaft (63) is provided at one of the moving shaft (62) and the roller driving gear (52);
a coupling recess (53) is provided at the other of the moving shaft (62) and the roller driving gear (52), into which the power connecting shaft (63) is inserted so as to couple the moving shaft (62) and the roller driving gear (52); and
the shaft-moving spring (65) is arranged between the moving shaft (62) and the roller driving gear (52).

15. An image forming apparatus including a fixing unit (30), the fixing unit (30) comprising:
a heating roller (31) to supply heat to a printable medium;
a press roller (33) arranged in close contact with the heating roller (31) so as to apply pressure to the printable medium in conjunction with the heating roller (31);
a releasing unit to selectively move the press roller (33) toward and away from the heating roller (31); and
a power conversion device (60) to selectively transmit a driving force to the heating roller (31) and the releasing unit.

16. The image forming apparatus according to claim 15, wherein the releasing unit comprises:
a press lever (35) to press the press roller (33) toward the heating roller (31);
a press spring (39) connected to the press lever (35); and
a release device (40) to operate the press lever (35) so as to release a pressing force exerted on the press roller (33).

17. The image forming apparatus according to claim 16, the fixing unit (30) further comprising:
a hinge shaft (36) to which the press lever (35) is rotatably mounted;
wherein the release device (40) includes a lever operating cam (41) to rotate the press lever (35) so as to move the press roller (33) away from the heating roller (31)

18. The image forming apparatus according to claim 17, the fixing unit (30) further comprising:
a main driving gear (51) to transmit the driving force to the power conversion device (60) from a driving power source.

19. The image forming apparatus according to claim 18, the fixing unit (30) further comprising:
a heating roller gear (32) to drive the heating roller (31) via the driving force;
a roller driving gear (52) mounted between the main driving gear (51) and the heating roller gear (32) to transmit the driving force to the heating roller gear (32); and
a cam gear (42) coupled to the lever operating cam (41) to transmit the driving force to the lever operating cam (41);
wherein the power conversion device (60) includes a moving gear (61) mounted movably on the main driving gear (51) so as to selectively engage with the roller driving gear (52) and the cam gear (42).

20. The image forming apparatus according to claim 19, wherein the power conversion device (60) further comprises:
a moving shaft (62) coupled to the moving gear (61);
a shaft-moving spring (65) to push the moving shaft (62) in one direction; and
a shaft-moving cam (66) to press the moving shaft (62) in a direction opposite to the pushing direction of the shaft-moving spring (65).

21. The image forming apparatus according to claim 20, wherein:
the power conversion device (60) further comprises a power connecting shaft (63) coupled to one of the moving shaft (62) and the roller driving gear (52);
a coupling recess (53) is provided in the one of the moving shaft (62) and the roller driving gear (52) that is not coupled to the power connecting shaft (63);
the power connecting shaft (63) is arranged so as to be insertable into the coupling recess (53); and
the shaft-moving spring (65) is arranged between the moving shaft (62) and the roller driving gear (52).

22. The image forming apparatus according to claim 20 or claim 21, further comprising:
a clutch device (67) to operate the shaft-moving cam (66) and arranged between the main driving source and the shaft-moving cam (66) so as to selectively transmit the driving power from the main driving source to the shaft-moving cam (66).
